# FASCICULE DE BREVET EUROPEEN

(11) **EP 0 465 386 B1**
(45) Date de publication et mention de la délivrance du brevet: **28.12.1994**
(21) Numéro de dépôt: 91420211.4
(22) Date de dépôt: 27.06.1991
(51) Int. Cl.: H02B 1/40

(54) **Coffret basse tension**
Niederspannungsgehäuse
Low voltage housing

(30) Priorité: 02.07.1990 FR 9008444
(43) Date de publication de la demande: 08.01.1992
(73) Titulaire: MERLIN GERIN, F-38240 Meylan (FR)
(72) Inventeur: Buet, Jacques, F-38050 Grenoble Cedex (FR); Chambron, Robert, F-38050 Grenoble Cedex (FR); Bonnet, Jean-Marc, F-38050 Grenoble Cedex (FR); Grosset-Janin, Emile, F-38050 Grenoble Cedex (FR)
(74) Mandataire: Ritzenthaler, Jacques

(56) Documents cités:
- EP-A- 0 123 788
- EP-A- 0 351 279
- FR-A- 1 443 292
- FR-A- 2 579 839

## Description

L'invention est relative à un coffret d'appareil électrique comprenant un fond constitué par une plaque de tôle, un châssis de support des appareils fixé audit fond et un boîtier en forme de cadre rectangulaire ayant deux faces latérales, une face supérieure et une face inférieure, et susceptible d'être fixé au fond avant ou après la mise en place du châssis avec les appareils et les câbles de connexion, de façon à encadrer ce châssis, lequel boîtier est obturé en face avant par un plastron et/ou une porte.

L'invention est décrite par la suite comme étant appliquée à un coffret du type décrit dans les demandes de brevets français déposées conjointement et intitulées respectivement: Châssis de fixation d'appareils électriques dans un coffret; et Coffret d'appareils électriques basse tension;mais il est clair qu'elle est applicable à tout autre type de coffret constitué par l'assemblage d'une plaque de fond et d'un cadre constituant les faces latérales du coffret. Les coffrets métalliques monoblocs ou en plusieurs pièces présentent des avantages indéniables, notamment de solidité et de possibilité de fabrication de tailles différentes avec le même outillage. Il est par contre difficile de réaliser des pièces de forme complexe et la présence de parties métalliques à proximité de pièces sous tension pose des problèmes d'isolation.

L'emploi de matières plastiques offre un choix quasi illimité des formes, mais chaque pièce nécessite un moule spécial et dans les installations industrielles, les pièces de grande taille en matière plastique présentent des inconvénients.

La présente invention a pour but de permettre la réalisation d'un coffret alliant les avantages des éléments en tôle et des éléments en matière plastique.

Le coffret selon l'invention est caractérisé en ce que chaque face latérale du boîtier est constituée par une plaque linéaire de tôle, dont les bords longitudinaux présentent des plis vers l'intérieur pour former un profilé rigide à extrémités ouvertes avec des faces antérieures et postérieures d'appui, et que les faces supérieure et inférieure du boîtier sont chacune constituées par une traverse en matière plastique moulée, dont chaque extrémité est conformée ou porte un pied orienté dans la direction longitudinale dudit profilé et que le section dudit pied correspond à celle du profilé pour permettre un emboîtement et une fixation de l'extrémité du profilé sur le pied.

Les traverses en matière plastique moulée sont des pièces élaborées sur lesquelles sont reportées toutes les fonctions de fixation et de liaison, ces pièces étant au niveau des entrées ou sorties des câbles dans le coffret où les riques de court-circuit sont fréquents.Le fond et les faces latérales sont par contre en tôle pliée découpée, réalisés sur des machines standards et il est possible par simple modification des commandes de cette machine, de réaliser des pièces de longueur différente permettant la réalisation de coffrets de hauteur différente utilisant des traverses standards. Les parties soumises à des contraintes mécaniques notables sont en tôle,dont la résistance notamment aux chocs est bien connue.

Il est avantageux de réaliser les faces latérales du coffret partiellement par un repli des bords longitudinaux du fond, lequel repli reçoit à emboîtement les faces latérales du boîtier.De même les faces supérieure et inférieure du boîtier ou seulement l'une de ces faces est constituée par l'association de la traverse en matière plastique et d'une plaque passe-câbles en matière plastique insérée entre la traverse et le fond. Ces dispositions permettent la mise en place des câbles et du châssis de support des appareils avec leur connexion avant l'emboîtement du boîtier sur le fond,de la manière décrite dans les demandes de brevets français précitées. Il est clair que l'invention est applicable à un coffret démuni de plaques passe-câbles, ou de bords repliés du fond, l'ensemble des faces du coffret étant constitué par le cadre du boîtier. Le fond et les faces latérales métalliques ne sont pas gênantes dans les coffrets standards, mais selon un développement de l'invention l'isolation peut être améliorée en gainant le fond d'un revêtement isolant, et en associant au profilé formant la face latérale, un profil extrudé en matière plastique, qui s'emboîte sur les bords longitudinaux des plaques. Ce profil extrudé constitue une cloison isolante empêchant tout accès aux plaques métalliques et se raccordant ou formant le revêtement isolant du fond sans solution de continuité. Le profil extrudé s'étend dans l'interface entre le fond et les faces latérales, qui est avantageusement conformée en interface d'emboîtement, facilitant le positionnement et le centrage, ainsi que l'étanchéité entre les parties aboutées. Le joint d'étanchéité appartient ou est fixé au profil extrudé.Les traverses présentent à leurs extrémités les pieds d'emboîtement et de fixation, par tout moyen approprié, des faces latérales en tôle. Sur la face avant des traverses, un bandeau parallèle au fond est traversé par les orifices de passage des vis de fixation du boîtier au fond. Ce bandeau ainsi que les têtes des vis de fixation sont cachés après montage du coffret par des volets encliquetables, qui peuvent porter une ou plusieurs étiquettes d'identification.Ces volets améliorent l'esthétique du coffret et ils affleurent avec les plastrons formant la face avant du boîtier. Le ou les plastrons sont montés sur des faces d'appui du boîtier constituées par les plis longitudinaux des plaques latérales, et ils sont avantageusement montés à pivotement grâce à une articulation simplifiée, constituée par un ergot en forme de queue d'aronde en saillie du plastron et inséré dans une fente correspondante du profilé rigide. La longueur de la fente correspond sensiblement à la largeur de la queue d'aronde pour permettre une mise en place ou un retrait aisé du plastron, tout en évitant un retrait intempestif par pivotement vers le bas sous l'action de son poids du plastron lors de l'ouverture.

Le côté opposé du plastron porte un crochet d'encliquetage s'étendant perpendiculairement au plastron vers l'intérieur du coffret et susceptible de s'encliqueter dans une perforation du pli du profilé rigide. Une ouverture de passage d'un tournevis est ménagée au droit du crochet d'encliquetage dans le plastron, pour permettre l'introduction, à partir de la face avant, d'un tournevis pour exercer un effort de flexion du crochet libérant le plastron.

L'ouverture du plastron s'accompagne d'un effort de traction vers l'avant exercé sur le tournevis et pour éviter tout glissement du tournevis, il est prévu selon l'invention de ménager sur la face du crochet, engagée par la tranche du tournevis des nervures ou stries de faible hauteur, dans lesquelles s'incruste le tournevis. On évite ainsi tout dérapage et l'ouverture du plastron est obtenue par un premier mouvement de pivotement du tournevis pour désengager le crochet, et un deuxième mouvement de retrait faisant pivoter le plastron sur la charnière formée par l'ergot. Les stries s'étendent perpendiculairement à la tranche du tournevis qui pénètre ainsi facilement dans la matière plastique formant les stries.

Le coffret comporte avantageusement une porte en tôle rigidifiée par quatre plis apparaissant sur les quatre bords et confinant un logement en cornière dans lequel est fixé le joint d'étanchéité de la porte. Les quatre plis évitent également un bord tranchant au niveau du joint, la cornière étant prolongée par un repli additionnel. La porte est fixée au boîtier par des charnières portées par l'une des faces latérales en tôle et ces charnières sont avantageusement du type à coincement assurant une plus grande rigidité. La charnière peut également être munie d'une aile raclante favorisant l'étanchéité au droit de la charnière.

D'autres avantages ressortiront plus clairement de la description qui va suivre d'un mode de mise en oeuvre de l'invention donné à titre d'exemple non limitatif et représenté aux dessins annexés dans lesquels:
- la figure 1 est une vue schématique éclatée d'un coffret selon l'invention;

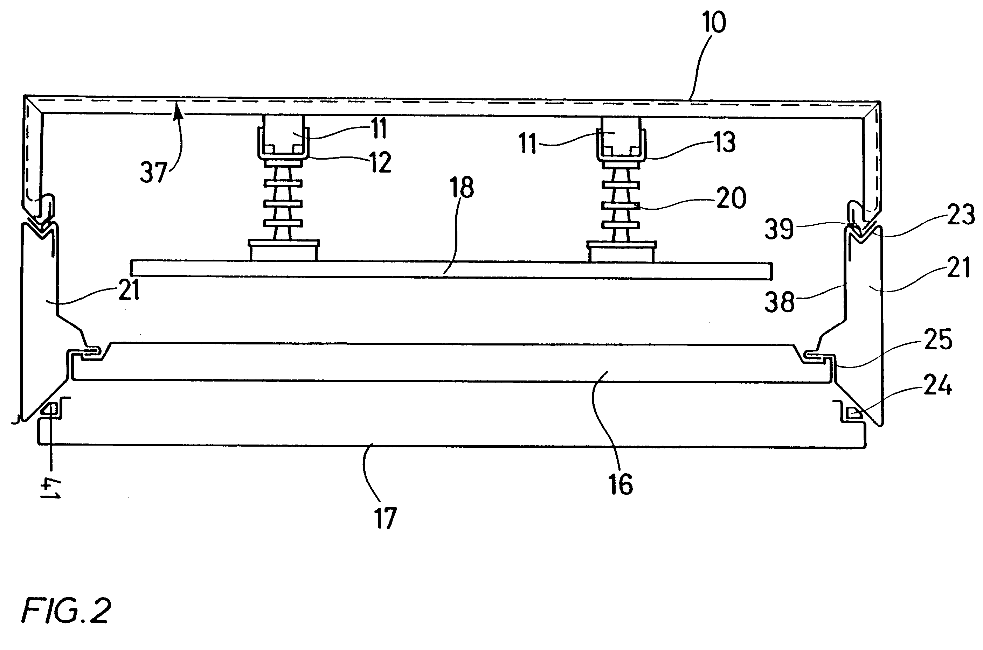

- la figure 2 est une vue de dessus du coffret selon la figure 1, la face supérieure étant supposée enlevée;

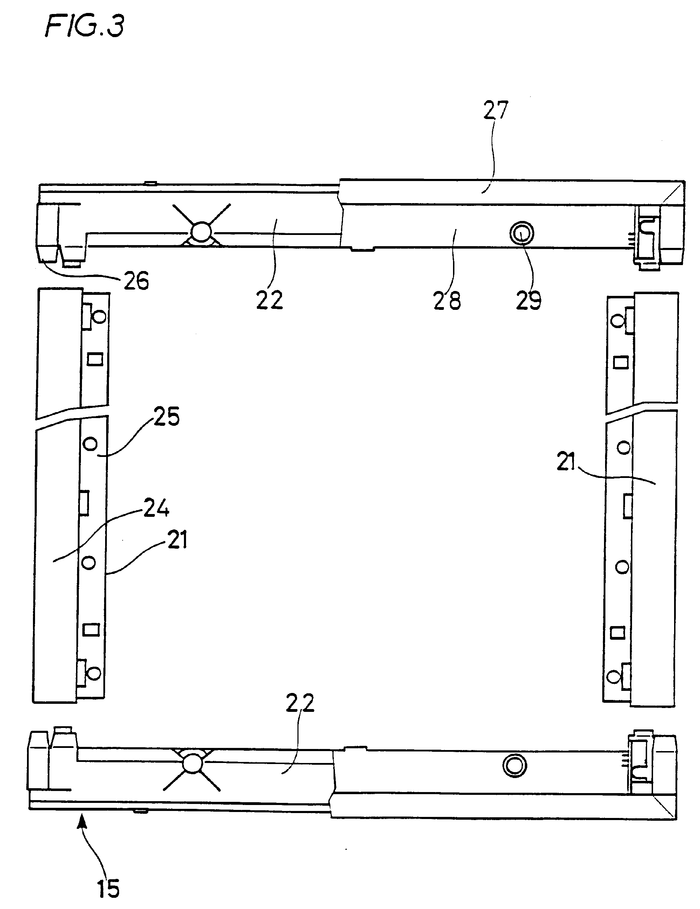

- la figure 3 est une vue en élévation du boîtier avant assemblage des quatre éléments constitutifs de ce boîtier;

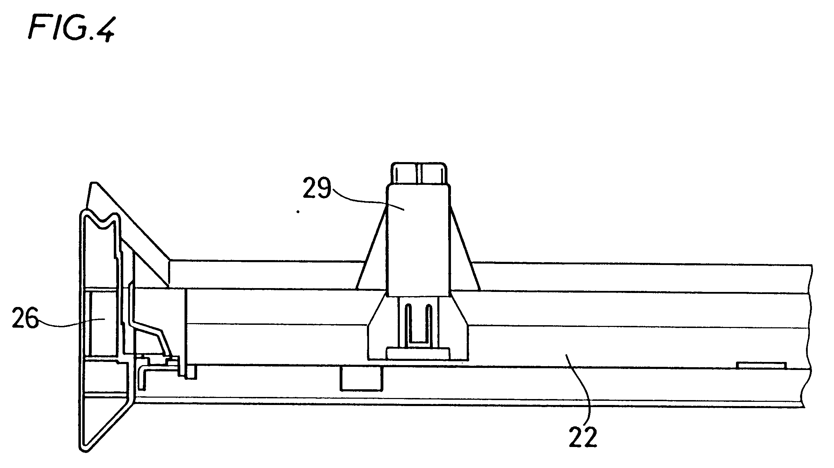

- la figure 4 est une vue partielle de dessus de la traverse inférieure de la figure 3;
- les figures 5 et 6 sont des vues respectivement en élévation et en coupe longitudinale d'un plastron selon la figure 1;
- la figure 7 est une vue à échelle agrandie d'un détail de la figure 6 montrant le crochet d'encliquetage;
- la figure 8 est une coupe suivant la ligne VIII-VIII de la figure 7;

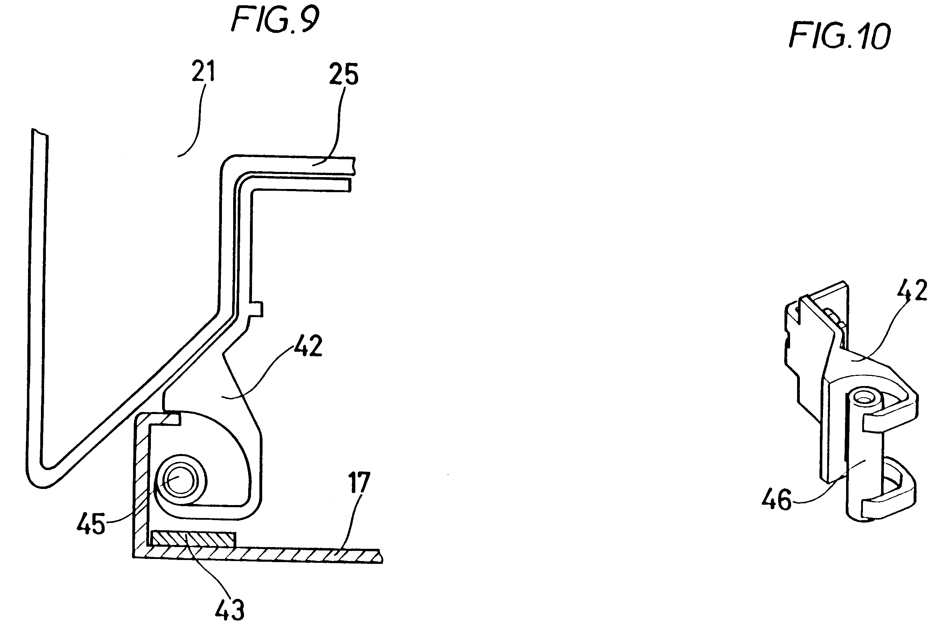

- la figure 9 est une vue en coupe de la charnière de support de la porte;

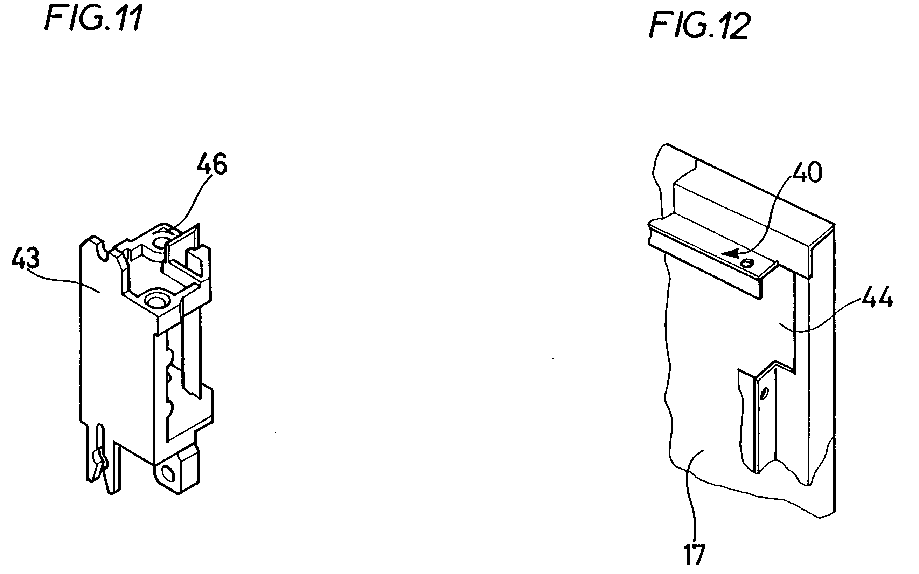

- les figures 10 et 11 sont des vues schématiques en perspective des paumelles fixes et mobiles constituant la charnière selon la figure 9;
- la figure 12 est une vue partielle en perspective de l'arrière de la porte.

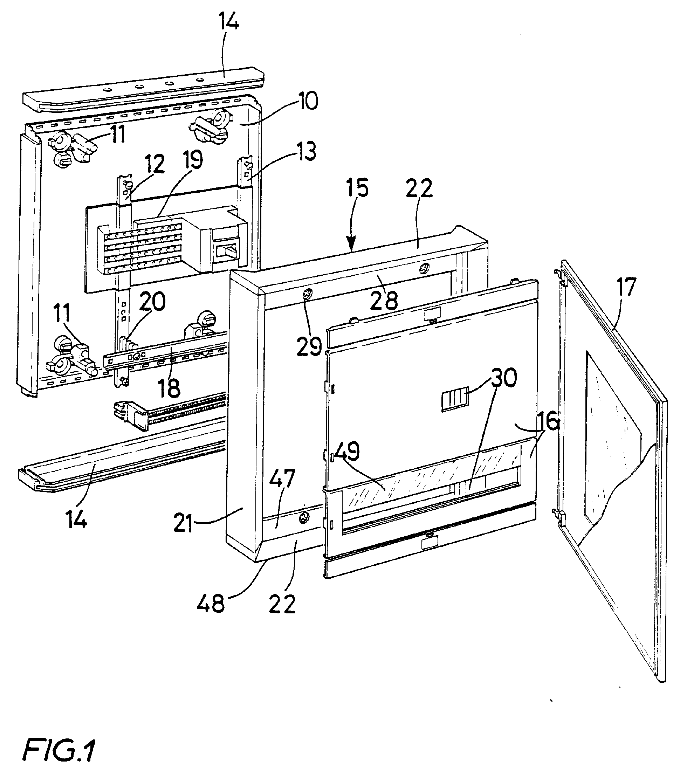

La figure 1, qui correspond à celle de la demande de brevet précité,à laquelle on se reportera avantageusement pour de plus amples détails, illustre un coffret mettant en oeuvre la présente invention. On reconnait le fond 10 portant quatre piliers 11 de fixation des deux montants 12,13 du châssis. Le coffret comporte de plus, des plaques passe-câbles 14 inférieures et supérieures, et un boîtier 15 se fixant sur le fond 10. Le boîtier 15 reçoit des plastrons 16 et éventuellement une porte 17. Le châssis en forme de H comporte un ou plusieurs rails 18 à profil symétrique d'encliquetage d'appareils modulaires, et éventuellement une platine 19, les rails 18 et la platine 19 étant fixés transversalement sur les montants 12, 13. Les rails 18 sont espacés des montants 12,13 par interposition d'entretoises 20 au droit des boulons de fixation des rails 18 sur les montants 12,13.

Le boîtier rectangulaire 15 est constitué par l'assemblage de quatre éléments, en l'occurence de deux profilés rigides 21 en tôles formant les deux faces latérales et de deux traverses 22, en matière plastique moulée. Les bords longitudinaux des profilés 21 sont repliés pour constituer un bord postérieur en dièdre 23, susceptible de s'emboîtier sur une partie conjuguée d'un bord replié 24 de la tôle de fond 10. Le bord antérieur du profilé 21 constitue un pan coupé 24 prolongé par une cornière 25. Les profilés rigides 21 sont fabriqués à partir d'une bande de tôle sur une machine d'estampage et de pliage, à des longueurs appropriées correspondant à la hauteur du coffret. Les traverses supérieures et inférieures 22 sont identiques et présentent chacune à ses deux extrémités un pied 26 orienté dans la direction longitudinale du profilé rigide 21 correspondant, et ayant la même section que ce profilé, qui en position monté du boîtier, s'emboîte sur le pied 26. La fixation des profilés rigides 21 sur les traverses 22 peut être réalisée par tout moyen approprié, notamment par simple encliquetage ou vissage. Le profil extérieur des traverses 22 correspond à celui des profilés 21, et comporte notamment un pan coupé antérieur 27 formant avec les pans coupés 24 des profilés rigides, un cadre d'encastrement de la porte 17. Chaque traverse comporte également un bandeau 28 parallèle au fond et coplanaire avec les faces correspondantes des cornières 25, ce bandeau 28 étant traversé par deux orifices 29 prolongés par des colonnes de guidage des vis de fixation du boîtier 15 aux piliers 11. Les traverses 22 peuvent être en une seule pièce moulée, de préférence partiellement évidée pour des raisons de coût et de rigidité mais il est plus simple de les réaliser en deux parties, assemblées par la suite par tout moyen approprié,par exemple par encliquetage et de préférence par soudage à ultrasons. Les parties supérieures et frontales,qui sont visibles,peuvent par exemple être réalisées par une pièce moulée séparée qui est fixée sur une autre pièce en forme de poutre, assurant la liaison mécanique des profilés rigides 21. Les bords postérieurs des traverses 22 sont conformés pour recevoir les plaques passe-câbles 14, qui peuvent y être fixées par simple emboîtement ou encliquetage.Les fonctions nobles du boîtier 15, notamment les fonctions de liaison et de fixation sont reportées sur les traverses 22 qui, réalisées par moulage peuvent présenter des formes appropriées. Les mêmes traverses 22 peuvent être utilisées pour toute une gamme de coffrets de hauteurs différentes, seule la longueur des profilés rigides 21 et celle du fond 10 étant modifiée. Les parties supérieures et inférieures du coffret correspondant aux entrées et aux sorties des câbles électriques sont en matière plastique isolante, tandis que les faces latérales 21 et le fond 10,exposés aux chocs ou autres contraintes mécaniques sont en tôle.

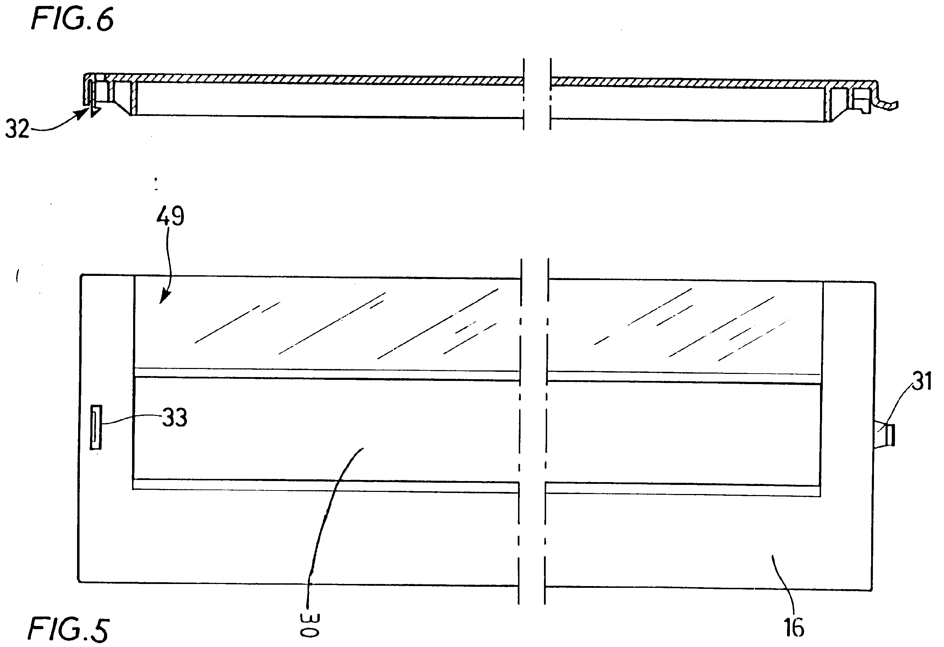

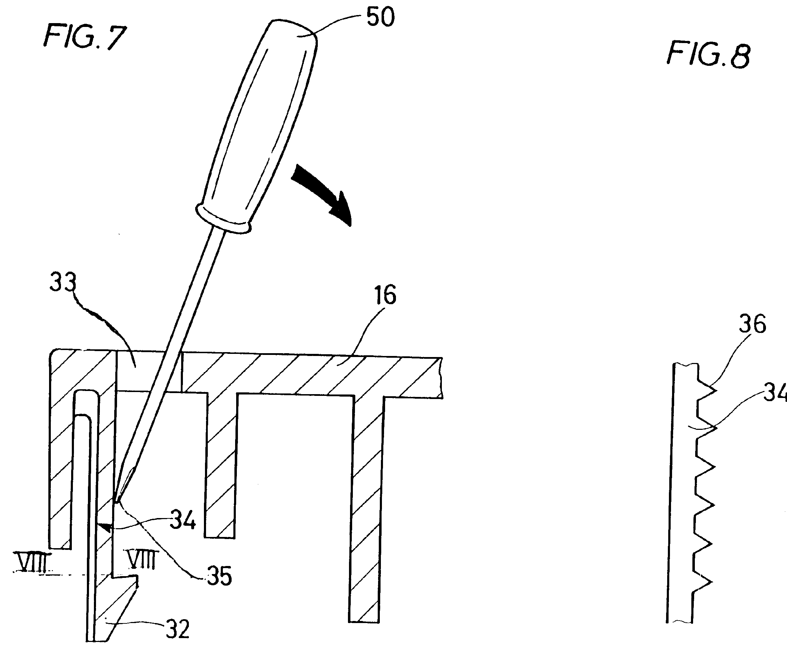

Le boîtier 15 peut être équipé d'un ou de plusieurs plastrons 16 prenant appui sur les cornières 25 et les parties correspondantes des traverses 22 et dotés éventuellement d'une ouverture 30 de passage des manettes des appareils. En se référant plus particulièrement aux figures 5 à 7 qui représentent un plastron plein 16 en forme de plaque en matière plastique moulée, on voit que l'un des bords porte un ergot 31 en forme de queue d'aronde s'emboîtant dans un orifice en forme de fente, ménagé dans la cornière 25, pour constituer une charnière simplifiée. En position ouverte du plastron 16, celui-ci peut être enlevé en retirant l'ergot 31 de sa fente.La forme en queue d'aronde de l'ergot 31 définit une gorge inférieure d'appui sur le bord de la fente évitant, par la venue en butée de la partie supérieure de la queue d'aronde contre le bord supérieur de la fente, une tombée du plastron 16 sous l'action de son propre poids, en début d'ouverture du plastron, Le bord opposé du plastron 16 porte un crochet d'encliquetage 32 pénètrant en position de fermeture du plastron 16 dans un orifice conjugué de la cornière 25 pour verrouiller le plastron 16. Le plastron 16 présente sur sa face avant une fente 33 au droit du crochet 32, permettant l'introduction d'un tournevis 50 pour déplacer le crochet 32 en position d'ouverture. Pour libérer le crochet 32 le tournevis prend appui sur le bord de la fente 33 et sa tranche 35 exerce une pression sur le flanc 34 du crochet 32. L'ouverture du plastron est obtenue par une traction vers l'avant du tournevis et pour éviter tout dérapage du tournevis et retrait de ce dernier de la fente 33, le flanc 34 porte des stries ou nervures 36 s'étendant perpendiculairement à la tranche 35. Il est facile de comprendre que sous l'effet de la pression exercée par la tranche 35, celle-ci s'incruste dans les stries 36 en créant un ancrage évitant tout dérapage.

Le plastron 16 présente en bordure de l'ouverture 30 un emplacement de fixation d'une étiquette 49 ou d'apposition d'une inscription de repérage des appareils et cette étiquette 49 peut être coiffée par un cache transparent de protection, notamment fixé par encliquetage sur le plastron 16.

L'isolation du coffret peut être améliorée par un revêtement isolant du fond 10, notamment par apposition d'un film ou écran 37 en matière plastique isolante sur la face interne du fond 10. L'isolation des profilés rigides 21 est obtenue par fixation d'un profil extrudé 38 en matière plastique venant s'emboîter, d'une part sur la tranche de la cornière 25, et d'autre part dans l'interface entre le bord postérieur du profilé rigide 21 et le bord replié du fond 10. Le profilé extrudé 38 gaine l'intérieur du profilé métallique 21 et l'isolation est assurée sans solution de continuité. Le profil extrudé 38 présente dans la zone d'interface entre le profilé rigide 21 et le fond 10, une surépaisseur 39 formant un joint d'étanchéité, cette surépaisseur pouvant venir de moulage ou être mise en place ultérieurement.

Lorsque le coffret comporte une porte 17, celle-ci est avantageusement constituée par une plaque de tôle dont les quatre bords présentent quatre plis en équerre, successivement deux plis rentrants formant un cadre rigide, un pli sortant délimitant une face 40 d'appui d'un joint d'étanchéité 41, et un pli rentrant supprimant le bord tranchant. La porte 17 est articulée à l'un des profilés rigides 21 par deux charnières dont les paumelles fixes 42 sont boulonnées sur les cornières 25. Les paumelles mobiles 43 sont logées dans des échancrures 44 à l'intérieur du cadre de la porte 17 formé par les bords repliés. Les charnières 42,43 sont du type à auto-coincement pour augmenter la rigidité de l'ensemble et elles peuvent présenter une aile raclante favorisant l'étanchéité. Le démontage de la porte 17 est réalisé par retrait de l'axe 45 de la charnière qui traverse les orifices 46 des paumelles 42,43.

En position fermée de la porte 17, celle-ci est partiellement encastrée dans le cadre formé par les pans coupés 24, et la quasi-totalité de la partie externe du coffret est en tôle. L'esthétique du coffret peut être améliorée par des volets 47 (dont seul l'un est représenté sur la figure 1), qui coiffent les bandeaux 28 et les têtes des vis de fixation du boîtier 15 sur le fond 10. Ces volets 47 sont avantageusement en matière plastique et présentent des crochets d'encliquetage sur les bandeaux 28. Les volets 47 peuvent porter des étiquettes 48 d'identification du coffret, celles-ci pouvant être incorporées dans un logement ménagé dans le volet, et être recouvertes d'un cache clipsable sur le volet.

Le montage du coffret ressort de l'exposé précédent et le lecteur pourra se reporter aux deux demandes de brevets précités pour de plus amples détails. Le boîtier composite 15 à faces supérieure et inférieure en matière plastique et à faces latérales constituées par un profilé rigide en tôle peut bien entendu être utilisé avec des coffrets d'un type différent, par exemple démuni de plaques passe-câbles, les orifices de passage des câbles étant ménagés dans les traverses 22 formant les faces supérieure et inférieure du boîtier 15. D'une manière analogue, les profilés latéraux 21 peuvent constituer toute la face latérale du coffret et présenter une section différente.

## Revendications

1. Coffret d'appareil électrique comprenant un fond (10) constitué par une plaque de tôle, un châssis (12,13) de support des appareils fixé audit fond et un boîtier(15) en forme de cadre rectangulaire ayant deux faces latérales, une face supérieure et une face inférieure, et susceptible d'être fixé au fond (10) avant ou après la mise en place du châssis avec les appareils et les câbles de connexion, de façon à encadrer ce châssis, lequel boîtier (15) est obturé en face avant par un plastron (16) et/ou une porte (17), caractérisé en ce que chaque face latérale du boîtier (15) est constituée par une plaque linéaire de tôle,dont les bords longitudinaux présentent des plis vers l'intérieur pour former un profilé rigide (21) à extrémités ouvertes avec des faces antérieures (24) et postérieures (23) d'appui, et que les faces supérieure et inférieure du boîtier (15) sont chacune constituées par une traverse (22) en matière plastique moulée, dont chaque extrémité est conformée ou porte un pied (26) orienté dans la direction longitudinale dudit profilé (21) et que la section dudit pied (26) correspond à celle du profilé (21) pour permettre un emboîtement et une fixation de l'extrémité du profilé sur le pied.

2. Coffret selon la revendication 1, caractérisé en ce que les bords latéraux de la plaque de fond (10) sont repliés en équerre vers l'avant du coffret pour constituer avec lesdits profilés (21), aboutés auxdits bords, les deux faces latérales métalliques du coffret.

3. Coffret selon la revendication 1 ou 2, caractérisé par une ou deux plaques passe-câbles (14) en matière plastique isolante qui s'étendent dans le prolongement desdites traverses (22) jusqu'au fond du coffret pour constituer avec les traverses les faces supérieure et inférieure en matière isolante du coffret.

4. Coffret selon la revendication 1,2 ou 3, caractérisé par un profil extrudé (38) en matière plastique susceptible d'être emboîté sur lesdits plis des bords longitudinaux des profilés latéraux (21), pour constituer une cloison latérale interne d'isolation de ces profilés métalliques latéraux (21) et que la plaque de fond (10) porte sur la face interne un revêtement isolant (37) qui se raccorde audit profil extrudé (38) sans solution de continuité de l'isolation.

5. Coffret selon la revendication 4, caractérisé en ce que ledit profil extrudé (38) porte ou est agencé en joint d'étanchéité (39) intercalé entre les faces postérieures d'appui (23) du profilé (21) en forme de coin de centrage et les bords repliés du fond (10) de forme conjuguée.

6. Coffret selon l'une quelconque des revendications précédentes, caractérisé en ce que la face antérieure de la traverse (22) comporte un bandeau (28) parallèle au fond (10) et ayant au moins un trou (29) de passage d'une vis de fixation du boîtier (15) au fond (10) et qu'un volet encliquetable (47) recouvre ce bandeau et la tête de la vis, et peut porter une étiquette (48) d'identification.

7. Coffret selon l'une quelconque des revendications précédentes, caractérisé en ce que le plastron (16) est fixé aux profilés rigides (21) du boîtier (15) d'un côté par une articulation (31) et du côté opposé par un crochet (32) d'encliquetage et que ladite articulation est constituée par un ergot (31) en queue d'aronde, inséré dans une fente ménagée sur le pli associé (25) du profilé rigide (21) pour permettre sélectivement le pivotement du plastron (16), le maintien du plastron pivoté par la partie évasée de la queue d'aronde et le retrait du plastron.

8. Coffret selon la revendication 7, caractérisé en ce que ledit crochet (32) s'étend perpendiculairement au plastron (16) vers l'intérieur du coffret pour s'encliqueter sur un orifice d'un pli du profilé rigide (21), que le plastron présente au droit du crochet un trou (33) de passage d'un tournevis (50) pour repousser par pivotement du tournevis le crochet (32) en position de libération et que la surface (34) du crochet coopérant avec le tournevis présentent des stries (36) d'incrustation de la tranche (35) du tournevis pour éviter tout dérapage lors d'une traction exercée sur le tournevis pour ouvrir le plastron, lesdites stries (36) étant notamment perpendiculaires à la tranche (35) du tournevis.

9. Coffret selon l'une quelconque des revendications précédentes, caractérisé en ce que le plastron (16) présente en bordure d'une ouverture (30) de passage des manettes des appareils, un emplacement de fixation d'une étiquette (49) pouvant être coiffée par un cache transparent encliquetable sur le plastron (16).

10. Coffret selon l'une quelconque des revendications précédentes, caractérisé en ce que la porte (17) est constituée par une plaque de tôle dont les bords présentent quatre plis pour accroître la rigidité et confiner une cornière (40) de logement du joint (41) d'étanchéité sans présenter de bord tranchant.

## Patentansprüche

1. Niederspannungs-Installationskasten für elektrische Schaltgeräte mit einem als Bodenblech ausgeführten Unterteil (10), einem Traggestell (12, 13) für die auf dem genannten Unterteil befestigten Schaltgeräte und einem als Rechteckrahmen ausgeführten und aus zwei Seitenflächen sowie einer oberen und einer unteren Stirnfläche bestehenden Gehäuse (15), das dazu dient, vor oder nach der Bestückung des Traggestells mit den Schaltgeräten und den Verbindungsleitungen auf dem Unterteil (10) befestigt zu werden, so daß dieses Traggestell umrahmt wird, wobei das genannte Gehäuse (15) an der Vorderseite durch eine Abdeckplatte (16) und/oder Tür (17) abgedeckt ist, dadurch gekennzeichnet, daß jede Seitenfläche des Gehäuses (15) aus einem geraden Blech besteht, dessen Längskanten zur Bildung eines biegesteifen Profils (21) mit offenen Enden sowie vorderen und hinteren Auflageflächen (24, 23) nach innen umgebogen sind, daß die obere und untere Stirnfläche des Gehäuses (15) aus jeweils einer als Kunststoff-Formteil gefertigten Stirnwandplatte (22) bestehen, deren jeweiliges Ende als in Längsrichtung des genannten Profils (21) ausgerichteter Zapfen (26) ausgebildet ist bzw. solchen Zapfen trägt, und daß der genannte Zapfen (26) den gleichen Querschnitt aufweist wie das Profil (21), um ein Aufstecken sowie eine Befestigung des Profilendes auf dem Zapfen zu ermöglichen.

2. Installationskasten nach Anspruch 1, dadurch gekennzeichnet, daß die Seitenränder des Unterteils (10) rechtwinklig zur Vorderseite des Gehäuses hin umgebogen sind, um mit den an die genannten Ränder anstoßenden genannten Profilen (21) die beiden metallischen Seitenwände des Installationskastens zu bilden.

3. Installationskasten nach Anspruch 1 oder 2, gekennzeichnet durch eine oder zwei Kabeldurchführungsplatten (14) aus Isolierstoff, die sich in der Verlängerung der genannten Stirnwandplatten (22) bis zum Boden des Installationskastens erstrecken, um zusammen mit den Stirnwandplatten die obere und untere Isolierstoff-Stirnwand des Installationskastens zu bilden.

4. Installationskasten nach Anspruch 1, 2 oder 3, gekennzeichnet durch ein stranggepreßtes Kunststoffprofil (38), das auf die genannten umgebogenen Längskanten der Seitenprofile (21) aufgeschoben wird, um eine seitliche interne Trennwand zur Isolierung dieser metallischen Seitenprofile (21) zu bilden, und dadurch, daß das Unterteil (10) auf seiner Innenseite eine Isolierbeschichtung (37) aufweist, die unmittelbar mit dem genannten stranggepreßten Profil (38) zur Bildung einer durchgehenden Isolierung verbunden ist.

5. Installationskasten nach Anspruch 4, dadurch gekennzeichnet, daß das genannte stranggepreßte Profil (38) eine Dichtung (39) trägt oder darstellt, die zwischen den hinteren als Zentrierkeil ausgebildeten Auflageflächen (23) des Profils (21) und den entsprechend geformten Biegekanten des Unterteils (10) angeordnet ist.

6. Installationskasten nach irgendeinem der vorhergehenden Ansprüche, dadurch gekennzeichnet, daß an der Vorderseite der Stirnwandplatte (22) parallel zum Unterteil (10) eine Leiste (28) angeordnet ist, die mindestens eine Bohrung (29) zur Durchführung einer Schraube zur Befestigung des Gehäuses (15) auf dem Unterteil (10) aufweist, und daß diese Leiste sowie der Schraubenkopf durch eine aufschnappbare Blende (47) abgedeckt sind, die ein Kennzeichnungsschild (48) aufnehmen kann.

7. Installationskasten nach irgendeinem der vorhergehenden Ansprüche, dadurch gekennzeichnet, daß die Abdeckplatte (16) auf der einen Seite über ein Gelenk (31) und auf der gegenüberliegenden Seite über einen Rasthaken (32) auf den biegesteifen Profilen (21) des Gehäuses (15) befestigt ist, und daß das genannte Gelenk aus einer schwalbenschwanzförmigen Nase (31) besteht, die in einen in der zugeordneten Biegekante (25) des biegesteifen Profils (21) ausgebildeten Schlitz eingreift, um wahlweise das Verschwenken der Abdeckplatte (16), das Halten der verschwenkten Abdeckplatte durch die in die schwalbenschwanzförmige Nase eingearbeitete Kehle sowie das Abnehmen der Abdeckplatte zu ermöglichen.

8. Installationskasten nach Anspruch 7, dadurch gekennzeichnet, daß der genannte Rasthaken (32) rechtwinklig zur Abdeckplatte (16) angeordnet ist und in das Innere des Installationskastens weist, um in einer in einem Falz des biegesteifen Profils (21) ausgebildeten Öffnung zu verrasten, daß rechtwinklig zum Rasthaken in der Abdeckplatte eine Einführungsöffnung (33) für einen Schraubendreher (50) ausgebildet ist, um den Rasthaken (32) durch Verschwenken des Schraubendrehers in die Entriegelungsstellung zu drücken, und daß die mit dem Schraubendreher zusammenwirkende Fläche (34) des Rasthakens Rillen (36) zum Eingreifen der Schraubendreherklinge (35) aufweist, um jegliches Abrutschen bei der Zugbewegung des Schraubendrehers zum Öffnen der Abdeckplatte zu verhindern, wobei die genannten Rillen (36) insbesondere rechtwinklig zur Schraubendreherklinge (35) ausgerichtet sind.

9. Installationskasten nach irgendeinem der vorhergehenden Ansprüche, dadurch gekennzeichnet, daß die Abdeckplatte (16) am Rand einer Aussparung 30 zur Durchführung von Schaltgeräte-Kipphebeln einen Bereich zum Anbringen eines Kennzeichnungschilds (49) aufweist, das durch eine transparente, auf die Abdeckplatte (16) aufschnappbare Schutzabdeckung abgedeckt werden kann.

10. Installationskasten nach irgendeinem der vorhergehenden Ansprüche, dadurch gekennzeichnet, daß die Tür (17) als Blechplatte ausgeführt ist, deren Kanten vier Umschläge aufweisen, um die Steifigkeit zu erhöhen und ohne Ausbildung einer scharfen Schneidkante eine winkelige Auflagefläche (40) für eine Dichtung (41) zu begrenzen.

## Claims

1. An electrical switchgear enclosure comprising a back plate (10) formed by a sheet metal plate, a chassis (12, 13) supporting the switchgear fixed to said back plate and a case (15) in the form of a rectangular frame having two side panels, a top panel and a bottom panel, and designed to be fixed to the back plate (10) before or after the chassis with the switchgear and connecting cables have been fitted, so as to surround this chassis, which case (15) is blanked off at the front by a front plate (16) and/or door (17), characterized in that each side panel of the case (15) is formed by a linear sheet metal plate, whose longitudinal edges present inward folds to form a rigid profiled section (21) with open ends with front (24) and rear (23) bearing faces, and that the top and bottom panels of the case (15) are both formed by a cross-member (22) made of moulded plastic material, each end of which is shaped as or bears a foot (26) oriented in the longitudinal direction of said profiled section (21) and that the cross-section of said foot (26) corresponds to that of the profiled section (21) to enable jointing and fixing of the end of the profiled section onto the foot.

2. The enclosure according to claim 1, characterized in that the lateral edges of the back plate (10) are folded towards the front of the enclosure to form with said profiled sections (21), abutted to said edges, the two metal side panels of the enclosure.

3. The enclosure according to claim 1 or 2, characterized by one or two cable grommet plates (14) made of insulating plastic material which extend in the continuation of said cross-members (22) up to the back plate of the enclosure to form with the cross-members the top and bottom panels of the enclosure which are made of insulating material.

4. The enclosure according to claim 1, 2 or 3, characterized by an extruded section (38) made of plastic material and designed to be fitted onto said folds of the longitudinal edges of the lateral profiled sections (21) to form an insulating lateral partition of these lateral profiled sections (21) and that the back plate (10) bears on its internal face an insulating coating (37) which is joined to said extruded section (38) without a continuity of insulation solution.

5. The enclosure according to claim 4, characterized in that said extruded section (38) bears or is arranged as a seal (39) inserted between the rear bearing faces (23) of the profiled section (21) in the shape of a centering wedge and the folded edges of the back plate (10) of conjugate shape.

6. The enclosure according to any one of the foregoing claims, characterized in that the front face of the cross-member (22) comprises a strip (28) parallel to the back plate (10) and having at least one hole (29) for passage of a screw for fixing the case (15) to the back plate (10) and that a clip-on flap (47) covers this strip and the head of the screw, and can bear an identification label (48).

7. The enclosure according to any one of the foregoing claims, characterized in that the front plate (16) is fixed to the rigid profiled sections (21) of the case (15) on one side by an articulation (31) and on the opposite side by a clipping latch (32) and that said articulation is formed by a dovetail spigot (31) inserted in a slot arranged on the associated fold (25) of the rigid profiled section (21) to selectively enable pivoting of the front plate (16), holding of the pivoted front plate by the flared part of the dovetail and removal of the front plate.

8. The enclosure according to claim 7, characterized in that said latch (32) extends perpendicularly to the front plate (16) towards the inside of the enclosure to clip onto an orifice of a fold of the rigid profiled section (21), that the front plate presents facing the latch a hole (33) for passage of a screwdriver (50) to push the latch (32) to the released position by pivoting of the screwdriver and that the surface (34) of the latch cooperating with the screwdriver presents serrations (36) for the edge (35) of the screwdriver to dig into to prevent any slipping when a traction is exerted on the screwdriver to open the front plate, said serrations (36) being notably perpendicular to the edge (35) of the screwdriver.

9. The enclosure according to any one of the foregoing claims, characterized in that the front plate (16) presents at the edge of an opening (30) for passage of the switchgear handles, a location for affixing a label (49) able to be covered by a transparent cover clipping onto the front plate (16).

10. The enclosure according to any one of the foregoing claims, characterized in that the door (17) is formed by a sheet metal plate whose edges present four folds to increase the rigidity and to confine a corner-piece (40) for housing the seal (41) without presenting a sharp edge.
